# EUROPÄISCHE PATENTSCHRIFT

(11) **EP 1 772 040 B1**
(45) Veröffentlichungstag und Bekanntmachung des Hinweises auf die Patenterteilung: **13.09.2017**
(21) Anmeldenummer: 05753209.5
(22) Anmeldetag: 22.06.2005
(51) Int. Cl.: H05B 37/02

(54) **SCHNITTSTELLENSCHALTUNG ZUR ]BERTRAGUNG VON DIGITALEN SIGNALEN**
INTERFACE CIRCUIT FOR TRANSMISSION OF DIGITAL SIGNALS
CIRCUIT D'INTERFACE DESTINE A LA TRANSMISSION DE SIGNAUX NUMERIQUES

(30) Priorität: 23.07.2004 DE 102004035753; 24.08.2004 DE 102004040947
(43) Veröffentlichungstag der Anmeldung: 11.04.2007
(60) Teilanmeldung: 09176979.4
(73) Patentinhaber: Tridonic GmbH & Co KG, 6851 Dornbirn (AT)
(72) Erfinder: BÖCKLE, Reinhard, A-6841 Mäder (AT)
(74) Vertreter: Rupp, Christian
(86) Internationale Anmeldenummer: PCT/EP2005/006752
(87) Internationale Veröffentlichungsnummer: WO 2006/010417

(56) Entgegenhaltungen:
- EP-A- 0 198 263
- EP-A- 0 490 329
- WO-A-91/14327
- US-A- 2 625 260
- US-A- 5 588 021
- US-A- 5 952 849
- US-A1- 2004 140 777

## Beschreibung

Die vorliegende Erfindung betrifft Schnittstellen, die bspw. im Zusammenhang mit Betriebsgeräten zum Betreiben vom Leuchtmitteln verwendet werden können.

Beleuchtungssysteme zur Beleuchtung großer Komplexe oder Gebäude, bei denen mehrere dezentral verteilt angeordnete Leuchten durch eine zentrale Steuereinheit angesteuert werden, erfordern aufgrund der Vielzahl der zur Verfügung stehenden Funktionen die Möglichkeit eines umfangreichen und zuverlässigen Datenaustauschs. Während es bei früheren Beleuchtungssystemen lediglich bekannt war, von einer zentralen Steuereinheit aus Ein- und Ausschaltbefehle zu den verschiedenen Leuchten zu übermitteln, sehen moderne Beleuchtungssysteme nunmehr auch die Möglichkeit eines Datentransfers von den Leuchten zu der zentralen Steuereinheit vor, um beispielsweise Informationen hinsichtlich des aktuellen Betriebszustands sowie Fehlerinformationen zu übermitteln. Die zum Betrieb in einem derartigen Beleuchtungssystem vorgesehenen Leuchten bzw. Lampenbetriebsgeräte weisen dementsprechend eine Kommunikationsschnittstelle auf, die nicht nur zum Datenempfang ausgestaltet ist sondern auch in der Lage ist, selbst Informationen auf ein Busleitungssystem zu senden.

Die in letzter Zeit neu entwickelten Beleuchtungssysteme bzw. Lampenbetriebsgeräte arbeiten überwiegend nach dem sogenannten DALI-Standard. Bei diesem DALI (Digital Addressable Lighting Interface)-Standard handelt es sich eine neuartige einfache und anwenderfreundliche Schnittstelle zur Realisierung intelligenter und funktionaler Lichtmanagement-Systeme. Ein wesentliches Merkmal des DALI-Standards ist, daß die Steuerbefehle und Informationen in digitaler Weise übertragen werden und dementsprechend die verschiedenen Geräte des Systems eine bidirektionale digitale Schnittstelle aufweisen.

Bei der Übertragung digitaler Steuersignale zur Lichtsteuerung ist es erforderlich, daß die von den Schnittstellen realisierten Bitlängen und Flankenverläufe (Steilheiten) in einem bestimmten Bereich gehalten werden. Beispielsweise ist entsprechend dem DALI-Standard lediglich ein Toleranzbereich von ±10% gegenüber der idealen Bitlänge von 416 µsec zulässig. Da allerdings die zum Einsatz kommenden Schnittstellen üblicherweise möglichst kostengünstig aufgebaut sind und insbesondere der für die Realisierung der Bitlängen verantwortliche Sendezweig deutlich komplexer und daher bauteiltoleranzanfälliger als der Empfangszeit ausgestaltet ist, besteht das Problem, daß diese Forderung nur schwer eingehalten werden kann. Insbesondere Temperatureffekte und Intoleranzen der Bauelemente können dazu führen, daß im schlechtesten Fall die von dem Sendezweig einer Schnittstelle realisierte Bitlänge außerhalb des zulässigen Bereichs liegt, was einen Datenaustausch verhindern würde.

Ähnliche Probleme bestehen auch bei nicht-digitalen bidirektionalen Schnittstellen, bei denen die von dem Sendezweig ausgegebenen Signale ebenfalls bestimmte Anforderungen erfüllen müssen, die - aufgrund des oben genannten Trends zur Kosteneinsparung - nur schwer einzuhalten sind.

Das Dokument EP0490329 offenbart eine Schnittstellenschaltung nach dem Oberbegriff des Anspruchs 1.

Der vorliegenden Erfindung liegt dementsprechend die Aufgabe zugrunde, eine Schnittstellenschaltung vorzuschlagen, deren Sendezweig verbesserte Eigenschaften der Flanken von digitalen Signalen aufweist.

Die Erfindung betrifft eine Schnittstellenschaltung nach Anspruch 1 und ein Verfahren nach Anspruch 9.

Erfindungsgemäß wird diese Aufgabe durch die Merkmale der unabhängigen Ansprüche gelöst. Die abhängigen Ansprüche bilden dabei den zentralen Gedanken der Erfindung in besonders vorteilhafter Weise weiter.

Gemäß dem ersten Aspekt der vorliegenden Erfindung ist eine Schnittstellenschaltung vorgesehen, aufweisend wenigstens einen Sendezweig zur Übertragung von digitalen Signalen von einem Betriebsgerät für Leuchtmittel zu einem angeschlossenen Bus. Dabei erfolgt die Übertragung im Sendezweig unter Zuhilfenahme eines Transformators.

Eingangsseitig kann an dem Transformator ein Signal angelegt werden, dass im Vergleich zur Bitlänge der Digitalsignale hochfrequent ist.

Die Bitlänge der Digitalsignale auf dem Bus kann dabei der Zeitdauer entsprechen, während der der Transformator eingangsseitig mit einem hochfrequenten Signal angesteuert wird.

Die Sekundärseite des Transformators kann einen Schalter ansteuern, der die digitalen Signale auf den Bus moduliert.

Der Schalter kann ein Transistor sein.

Die Flankensteilheit der Schaltvorgänge dieses Schalters können wählbar sein.

Beispielsweise kann die Flankensteilheit der Schaltvorgänge dieses Schalters durch entsprechende Wahl der Parameter von dem Schalter vorgeschalteten Filterschaltungen wählbar sein.

Die Filterschaltungen können beispielsweise Tiefpassschaltungen sein.

Dabei können die ansteigenden und abfallenden Flanken unabhängig voneinander einstellbar sein.

Der Transformator kann eingangsseitig von einem Controller angesteuert werden, der beispielsweise Teil eines Betriebsgeräts für Leuchtmittel ist.

Die Schaltung kann als bidirektionale Schnittstelle ausgelegt sein und dementsprechend zusätzlich einen Empfangszweig aufweisen.

Gemäß einem weiteren Aspekt der vorliegenden Erfindung ist bei Betriebsgerät für Leuchtelemente vorgesehen, das eine Schaltung nach der oben genannten Art aufweist.

Schließlich bezieht sich die vorliegende Erfindung auch auf ein Verfahren zur Übertragung von Signalen von einer Steuereinrichtung zu einem angeschlossenen Digitalbus. Dabei wird die Primärseite eines Transformators durch eine Steuereinrichtung angesteuert. Die Sekundärseite des Transformators steuert einen Schalter an, der digitale Signale auf den Bus aufmoduliert. Die Schaltvorgänge des Schalters stellen also die Flanken der Bitsignale dar.

Nachfolgend soll die vorliegende Erfindung anhand der beiliegenden Zeichnungen näher erläutert werden. Es zeigen:
- Fig. 1: schematisch den Aufbau einer bidirektionalen Schnittstelle gemäß der vorliegenden Erfindung;
- Fig. 2: eine mögliche Ausgestaltung der erfindungsgemäßen bidirektionalen Schnittstelle; und
- Fig.3a: u. b einen Sendevorgang, wo die vorliegende Erfindung auf den DALI-Industriestandard angewendet wird.

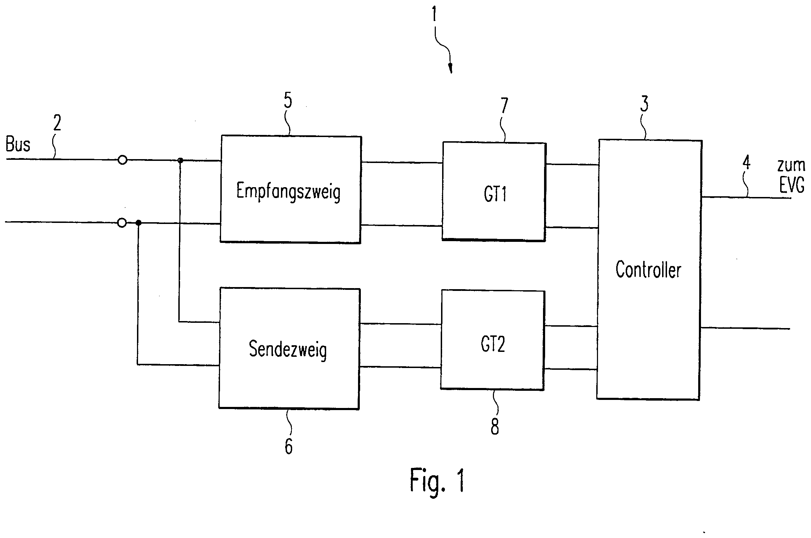

Fig. 1 zeigt zunächst allgemein den Aufbau einer bidirektionalen Schnittstelle 1, die zum Empfang und zur Übermittlung von Daten über die beiden Leitungen eines Busleitungssystems 2 ausgestaltet ist. Der Aufbau dieser Schnittstelle 1 entspricht im wesentlichen dem klassischen Aufbau bidirektionaler Schnittstellen, da die oben erwähnten erfindungsgemäßen Maßnahmen in erster Linie softwaremäßiger Natur sind und nicht den Einsatz zusätzlicher Hardwarekomponenten erfordern.

Ein Bauteil der Schnittstelle 1 ist dementsprechend ein Controller 3, der für den Datenempfang und die Datenübertragung verantwortlich ist und über Ausgangsleitungen 4 mit einem anzusteuernden Gerät in Verbindung steht. Bei dem vorliegenden Ausführungsbeispiel soll davon ausgegangen werden, daß es sich bei dem anzusteuernden Gerät um ein Gerät zum Betreiben von Leuchtmittel handelt, insbesondere für eine Lampe wie bspw. mit einer Gasentladungslampe, LEDs oder Halogen-Leuchtmitteln. Bevorzugt ist ein elektronisches Vorschaltgerät (EVG) für Gasentladungslampen.

Weitere Komponenten der bidirektionalen Schnittstelle sind zum einen ein Empfangszweig 5, der zum Empfangen von auf den Busleitungen 2 liegenden Informationen verantwortlich ist und über ein erstes Element 7 zur galvanischen Trennung mit dem Controller 3 verbunden ist. Für die Übermittlung von Informationen von dem Controller 3 zu den Busleitungen 2 ist ferner ein Sendezweig 6 vorgesehen, der über ein weiteres Element 8 zur galvanischen Trennung mit dem Controller 3 verbunden ist.

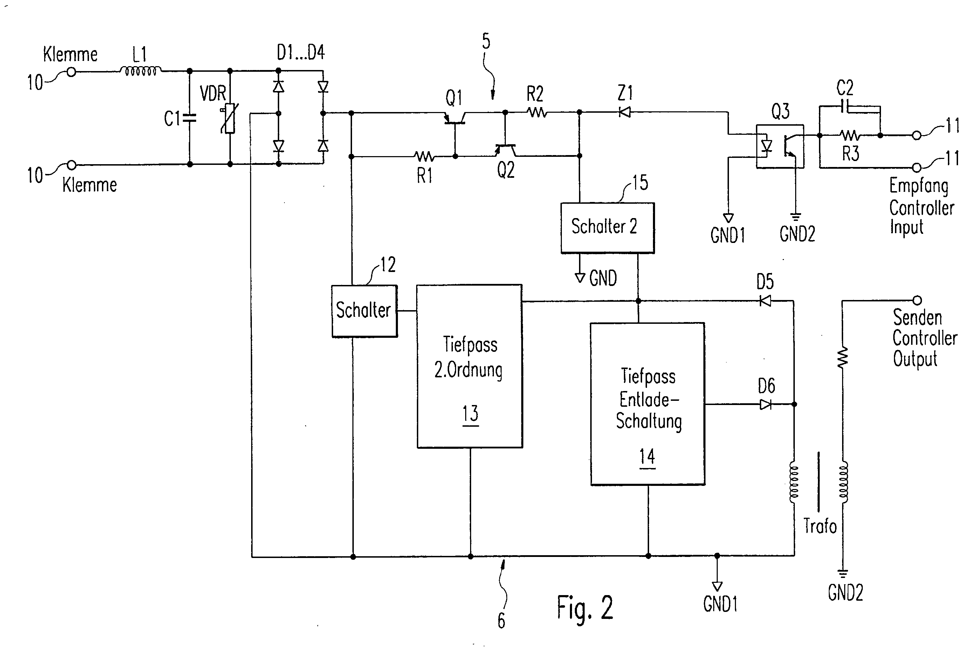

Eine mögliche Ausgestaltung des Sende- und Empfangszweigs sowie der Elemente zur galvanischen Trennung ist in Fig. 2 dargestellt. Eine Besonderheit der in Fig. 2 dargestellten Schaltung besteht dabei darin, daß die Ansteuerung des Sendezweigs nicht - wie bei bislang bekannten bidirektionalen Schnittstellen üblich - über einen Optokoppler sondern über einen Transformator erfolgt. Wie später noch näher erläutert wird, bringt diese Ausgestaltung besondere Vorteile hinsichtlich der Möglichkeiten zur Datenübertragung mit sich. Anzumerken ist allerdings, daß die vorliegende Erfindung keinesfalls auf die in Fig. 2 speziell dargestellte Ausgestaltung einer bidirektionalen Schnittstelle beschränkt ist.

Bei der in Fig. 2 dargestellten Schnittstelle handelt es sich um eine digitale bidirektionale Schnittstelle, die über zwei Klemmen 10 mit den beiden Busleitungen des Busleitungssystems verbunden ist und eingangsseitig zunächst ein Dämpfungsnetzwerk bestehend aus einer Induktivität L1, einem Kondensator C1 sowie einem spannungsabhängigen Widerstand VDR aufweist. Die Funktion dieses Netzwerks besteht darin, an den Busleitungen auftretende Transienten, also sehr kurze, schnelle und starke Spannungs- und Stromänderungen zu dämpfen. Dies ist deshalb erforderlich, da die Schnittstelle auch an die normale Netzspannungsleitung anschließbar sein soll und eine Spannungsfestigkeit von bis zu 1000 Volt aufweisen sollte.

An das Dämpfungsnetzwerk schließt sich ein aus vier Dioden D1 bis D4 bestehender Gleichrichter an, dessen Funktion es ist, die an den beiden Anschlußklemmen 10 anliegenden Signale grundsätzlich in gleicher Weise weiterzuleiten, so daß ein Anschluß der beiden Klemmen 10 in beliebiger Weise an die Leitungen des Busleitungssystems erfolgen kann.

Der Empfangszweig 5 der Schnittstelle weist im folgenden eine Schaltungsanordnung aus zwei Transistoren Q1 und Q2 sowie zwei Widerständen R1 und R2 auf, deren Aufgabe es ist, die Stromstärke des zu dem Optokoppler Q3 weitergeleiteten empfangenen Signals auf einen Wert von maximal 2 mA zu beschränken. Dies entspricht den Vorgaben entsprechend dem DALI-Standard. Über eine Diode Z1 werden dementsprechend dann die Signale zu dem Optokoppler Q3 weitergeleitet, der als Element zur galvanischen Trennung dient und die Signale über eine Parallelschaltung bestehend aus einem Kondensator C2 und einem Widerstand R3 schließlich an zwei Ausgangsanschlüsse 11 weiterleitet, die den Empfangszweig der Schnittstelle mit dem Controller verbinden.

Zur Übertragung von Signalen auf die Busleitungen war bei klassischen Schnittstellen bislang ebenfalls ein Optokoppler vorgesehen, der allerdings aufgrund einer extremen Temperaturdrift der sogenannten Current Tranfer Ratio (CTR) nur schlecht geeignet ist, die erforderlichen Toleranzgrenzen für die vorgegebenen Bitzeiten einzuhalten. Ein weiteres Problem eines Optokopplers besteht darin, daß dieser eine zu geringe Überspannungsfestigkeit aufweist.

Bei der in Fig. 2 dargestellten Schaltungsanordnung wird dementsprechend nunmehr als Element zur galvanischen Trennung ein Transformator verwendet, der einen Schalter 12 zur Erzeugung der digitalen Signale an den Anschlußklemmen 10 ansteuert. Der Vorteil des verwendeten Transformators besteht darin, daß dieser die Energie zum Ansteuern des Schalters 12 übertragen kann und die Energie nicht von der Schnittstelle entnommen werden muss. Aufgrund der speziellen Ausgestaltung können die Anstiegszeit und Abfallzeit der Flanken des Bussignals nahezu unabhängig voneinander eingestellt werden. Dies hat zur Folge, daß die dabei erreichte Qualität des Signals entscheidend verbessert wird, was sowohl die Toleranz der Bitzeiten als auch die Gleichmäßigkeit der Flanken betrifft.

Die Erzeugung von digitalen Signalen an den Anschlußklemmen 10 erfolgt dann wie folgt:
Zur Erzeugung eines Bitsignals wird der Transformator hochfrequent angesteuert und zwar mit einer Frequenz, die in etwa dem 100-fachen der gewünschten Bitzeit entspricht. Mit anderen Worten, während der Übertragungszeit eines einzelnen Bits erfolgt an der Primärwicklung des Transformators in etwa 100 Mal ein Spannungswechsel, der auf die Sekundärwicklung übertragen wird.

Die an der Sekundärwicklung des Transformators anliegende hochfrequente Wechselspannung hat zur Folge, daß ein dem Schalter 12 vorgeordneter Tiefpass 2. Ordnung 13 aufgeladen wird, was wiederum bewirkt, daß der Schalter 12, bei dem es sich um einen Feldeffekttransistor handeln kann, leitend geschaltet wird und dementsprechend ein Bitsignal erzeugt wird.

Der Tiefpass 2. Ordnung 13 ist mit einer Tiefpass-Entladeschaltung 14 verbunden, die permanent versucht, den Tiefpass 2. Ordnung 13 wieder zu entladen. Solange allerdings der Transformator hochfrequent angesteuert wird, wird dies durch die beiden Dioden D5 und D6 verhindert. Erst zu dem Zeitpunkt, zu dem an dem Transformator primärseitig kein hochfrequentes Signal mehr anliegt, kann die Tiefpass-Entladeschaltung 14 den Tiefpass 2. Ordnung 13 entladen, bis aufgrund dessen der Schalter 12 wieder geöffnet und dementsprechend eine ansteigende Signalflanke zur Beendigung des Bitsignals erzeugt wird.

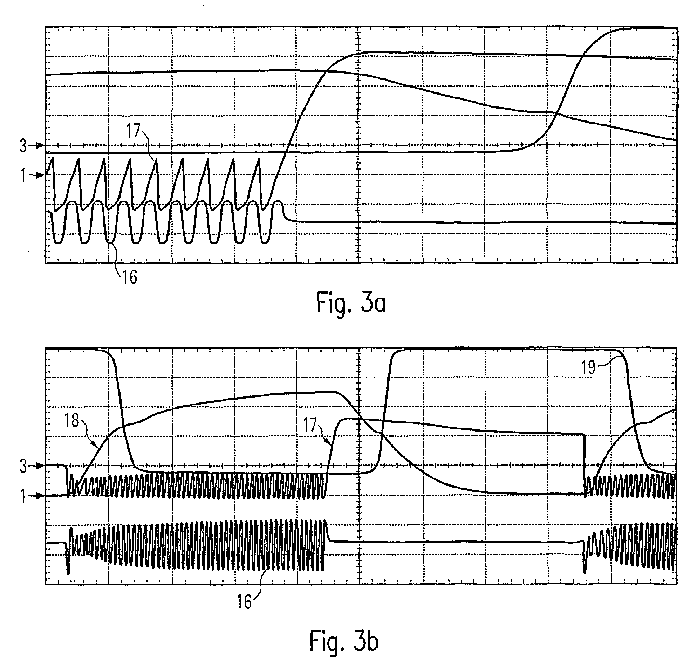

Anhand der Signalverläufe von Figur 3a und 3b soll nunmehr das Aussenden eines Digitalbits gemäß der vorliegenden Erfindung näher erläutert werden. Fig. 3a zeigt dabei einen vergrößerten Ausschnitt des mittleren Bereichs von Fig. 3b.

Es wird dabei angenommen, dass der DALI-Standard angewandt wird, bei dem die logische Information "1" dem Nullpegel entspricht. Im folgenden soll also das Aussender einer solchen "1" erläutert werden.

Mit 16 sind die Hochfrequenzimpulse gezeigt, die bsp. von einem Controller eines Betriebsgeräts eingangsseitig an dem Transformator angelegt werden. Das Tastverhältnis kann dabei beispielsweise 400*µ*s/400*µ*s betragen.

Mit 17 ist die Spannung bezeichnet, die in der Tiefpass-Entladeschaltung 14 die Entladung des Tiefpasses zweiter Ordnung 13 ansteuert.

Mit 18 ist die Ansteuerspannung des Schalters 12 (beispielsweise die Gatespannung für den Fall eines FET-Transistors) gezeigt.

Mit 19 ist schließlich die auf dem Bus aufmodulierte Spannung gezeigt. Im linken Bereich ist eine fallende Flanke (Übergang auf den niedrigen Spannungspegel) an dem Bussignal 19 zu sehen. Diese fallende Flanke wird dadurch ausgelöst, dass der Schwellenwert der Gatespannung des Schalters 12 überschritten wurde und der Schalter somit eingeschaltet ist. Solange nun das Hochfrequenzsignal 16 eingangsseitig am Transformator anliegt, wird das Gate des Schalters 12 laufend geladen, so dass dieser Zeitraum des Anliegens der Hochfrequenzimpulse 16 an der Eingangsseite des Transformators die Zeitdauer eines Bits, d.h. die Zeitdauer definiert.

Wenn nunmehr diese Hochfrequenz-Impulse 16 nach einer durch den Controller vorgegebenen Zeitdauer nicht mehr an den Trafo anliegen, steigt die Spannung 17 und die Tiefpass-Entladeschaltung 14 wird schließlich akitviert. Dadurch wird nunmehr die Gatespannung des Schalters 12 erniedrigt. Sobald der Schwellenwert für die Gatespannung des Schalters 12 wieder unterschritten wird, sperrt der Schalter 12 wieder und es stellt sich eine steigende Flanke an dem Bussignal 19 ein.

Der Verlauf der Flanken wird im wesentlichen durch Wahl der Parameter der Tiefpassschaltung 13 sowie der Tiefpass-Entladeschaltung 14 im Zusammenspiel mit dem Schalter 12 eingestellt.

Die Erfindung hat weiterhin Vorteile dahingehend, dass sie für verschiedene Protokolldefinitionen geeignet ist, wie im folgenden näher geschildert werden soll.

Es gibt nunmehr auch Standards, bei denen eine Fehlerrückmeldung bei abgesenkter Busspannung auf bspw. unter 5 Volt durch einen Stromfluss in einem Bereich von bspw. 0,8 mA bis 2 mA erfolgt.

Bei bekannten Schaltungen wird dieser Stromfluss durch zeitweises Kurzschliessen des angeschlossenen Busses erreicht mit dem Nachteil, dass es infolge des erzeugten Kurzschlusses zu Kollisionen am Bus kommt, wenn zum Zeitpunkt einer Fehlermeldung eines Busteilnehmers ein Protokoll zu anderen Busteilnehmern gesendet werden soll.

Die Erfindung vermeidet dieses Kurzschliessen des Busses zum Zwecke einer Fehlermeldung, wenn ein angeschlossener Bus-Controller eine Spannung von bspw. 4-5 Volt vorgibt. Dies wird dadurch erreicht, dass der Empfangsteil der Schnittstelle, d.h. insbesondere der Optokoppler Q3 und die Z-Diode Z1 überbrückt wird. Dazu wird im folgenden Fall der Transformator eingangsseitig derart angesteuert, dass zwar noch nicht der Schalter 12 durchgeschaltet wird (was ja ein "senden" bedeuten würde), aber die sekundärseitige Spannung ausreicht, um den bipolaren Schalter 15 zur Überbrückung bspw. des Optokopplers anzusteuern.

Gemäss der zuerst genannten Definition stellt also eine auf Null fallende Flanke den Beginn eines gesendeten Bits dar, während im anderen Fall der Abfall auf einen niedrigen Strompegel ungleich Null als Fehlermeldung dient (gleichwohl können andere Geräte weiter auf dem Bus senden, da ja nur - genau wie in regulären Empfangsfallnur ein maximaler Strom von 2 mA gezogen wird. Das beeinflusst aber nicht den Hochpegel des Buses.

Die Diskriminierung, ob ein Senden durch Ansteuern des Schalters 12 oder eine Fehlermeldung durch Ansteuern des Schalters 15 erfolgen soll, erfolgt durch das Zusammenspiel der Tiefpasschaltung zweiter Ordnung 13 mit unterschiedlichen eingangsseitigen Ansteuersignalen des Transformators. Die Diskriminierung kann insbesondere durch unterschiedliche Puls/Pausenverhältnisse der eingangsseitigen Signale erreicht werden.

Bspw. kann für das Senden durch Ansteuerung des Schalters ein Verhältnis von 400*µ*s ein, 400*µ*s aus gewählt werden. Für die Fehlermeldung durch Ansteuerung alleine des Schalters 15 kann bspw. ein Verhältnis gewählt werden, bei dem die "EIN"-Zeitdauer wesentlich kürzer und das Tastverhältnis wesentlich niedriger gewählt ist, was also ausreicht, um den Schalter 15 zu schalten.

Es ist also eine Diskriminierungsschaltung vorgesehen, zu der durchaus auch der Transformator gezählt werden kann, die eingangsseitig angelegte Ansteuersignale dahingehend diskriminiert, dass wahlweise durch Sliessen eines ersten Schalters über den Sendezweig eine abfallende Flanke auf dem Bus oder aber durch Schliessen eines zweiten Schalters ein Überbrücken des Sendezweigs erfolgt. Der Transformator ist also nur eine Realisierungsmöglichkeit; auch andere passive analoge Diskriminierungsschaltungen sind vorstellbar. Gleiches gilt für die Tiefpassschaltung, die ebenfalls nur eine denkbare Implementierung darstellt.

## Patentansprüche

1. Schnittstellenschaltung aufweisend wenigstens einen
Sendezweig (6) zur Übertragung von digitalen Signalen von einem Betriebsgerät für Leuchtmittel zu einem angeschlossenen Bus (2), wobei die Übertragung unter Zuhilfenahme eines Transformators der Schnittstellenschaltung erfolgt, **dadurch gekennzeichnet, dass** eingangsseitig der Transformator mit einem im Vergleich zur Bitlänge der Digitalsignale (19) hochfrequenten Signal (16) angesteuert wird,
und, dass das hochfrequente Signal (16) an der Eingangsseite des Transformators die Zeitdauer eines Bits definiert und dass die Sekundärseite des Transformators einen Schalter (12) der Schnittstellenschaltung ansteuert, der die digitalen Signale (19) auf den Bus (2) moduliert, wobei, während an dem Transformator eingangsseitig ein im Vergleich zu der Bitlänge hochfrequentes Signal (16) anliegt, die Bitlänge der Digitalsignale (19) auf dem Bus (2) der Zeitdauer entspricht.

2. Schaltung nach Anspruch 1, **dadurch gekennzeichnet, dass** der Schalter (12) ein Transistor ist.

3. Schaltung nach Anspruch 1 oder 2, **dadurch gekennzeichnet, dass** die Flankensteilheit der Schaltvorgänge des Schalters (12) wählbar ist.

4. Schaltung nach Anspruch 3, **dadurch gekennzeichnet, dass** die Flankensteilheit der Schaltvorgänge durch entsprechende Wahl der Parameter von Filterschaltungen wählbar sind.

5. Schaltung nach Anspruch 4, **dadurch gekennzeichnet, dass** die Filterschaltungen Tiefpassschaltungen sind.

6. Schaltung nach einem der Ansprüche 3 bis 5, **dadurch gekennzeichnet, dass** die ansteigenden und abfallenden Flanken unabhängig voneinander einstellbar sind.

7. Schaltung nach einem der vorhergehenden Ansprüche, **dadurch gekennzeichnet, dass** der Transformator eingangsseitig von einem Controller angesteuert wird.

8. Schaltung nach einem der vorhergehenden Ansprüche, **dadurch gekennzeichnet, dass** sie als bidirektionale Schnittstelle ausgelegt ist und einen Empfangszweig aufweist.

9. Verfahren zur Übertragung von Signalen von einer Steuereinrichtung zu einem angeschlossenen Digitalbus (2), aufweisend die folgenden Schritte:
- Ansteuerung der Primärseite eines Transformators durch die Steuereinrichtung, und
- Ansteuerung eines Schalters (12), der digitale Signale (19) auf den Bus (2) aufmoduliert, durch die Sekundärseite des Transformators,
**dadurch gekennzeichnet, dass** eingangsseitig der Transformator mit einem im Vergleich zur Bitlänge der Digitalsignale (19) hochfrequenten Signal (16) angesteuert wird, und, dass das hochfrequente Signal (16) an der Eingangsseite des Transformators die Zeitdauer eines Bits definiert und dass die Sekundärseite des Transformators einen Schalter (12) der Schnittstellenschaltung ansteuert, der die digitalen Signale (19) auf den Bus (2) moduliert, wobei, während an dem Transformator eingangsseitig ein im Vergleich zu der Bitlänge hochfrequentes Signal (16) anliegt, die Bitlänge der Digitalsignale (19) auf dem Bus (2) der Zeitdauer entspricht.

## Claims

1. interface circuit comprising at least one transmitting branch (6) for the transmission of digital signals from an operating device for lighting means to a connected bus (19), wherein the transmission is carried out with the aid of a transformer of the interface circuit,
**characterized in that**
the input side of the transformer is controlled by a signal (16) which is high-frequency in comparison with the bit length of the digital signal (19),
the high-frequency signal (16) at the input side of the transformer defines the period of a bit and the secondary side of the transformer controls a switch (12) of the interface circuit which modulates the digital signals (19) at the bus (2),
wherein the bit length of the digital signals (19) at the bus (2) corresponds to the period during which there is applied to the input side of the transformer a signal (16) which is high-frequency in comparison to the bit length.

2. Circuit according to claim 1,
**characterized in that**
the switch (12) is a transistor.

3. Circuit according to claim 1 or 2,
**characterized in that**
the edge steepness of the switching operations of the switch (12) may be selected.

4. Circuit according to claim 3,
**characterized in that**
the edge steepness of the-switching operations may be selected by means of a corresponding selection of the parameters of filter circuits.

5. Circuit according to claim 4,
**characterized in that**
the filter circuits are low-pass circuits.

6. Circuit according to one of claims 3 to 5,
**characterized in that**
the rising and falling edges are adjustable independently of one another.

7. Circuit according to one of the preceding claims,
**characterized in that**
the input side of the transformer is controlled by a controller.

8. Circuit according to one of the preceding claims,
**characterized in that**
it is designed as a bidirectional interface and has a receiving branch.

9. Method for transmitting signals from a control device to a connected digital bus (2), comprising the following steps:
- control of the primary side of a transformer by the control device, and
- control of a switch (12) which modulates digital signals (19) onto the bus (2) by means of the secondary side of the transformer,
**characterized in that**
the input side of the transformer is controlled by a signal (16) which is high-frequency in comparison to the bit length of the digital signals (19),
the high-frequency signal (16) at the input side of the transformer defines the period of a bit, and
the secondary side of the transformer controls a switch (12) of the interface circuit, which modulates the digital signals (19) at the bus (2),
wherein during the period that a signal (16), which is high-frequency in comparison to the bit length, is present at the input side of the transformer, the bit length of the digital signals (19) at the bus (2) corresponds to the period.

## Revendications

1. Circuit d'interface, présentant au moins une branche d'émission (6) destinée à la transmission de signaux numériques à partir d'un appareil de commande pour des moyens d'éclairage vers un bus (2) connecté, la transmission s'effectuant avec l'aide d'un transformateur du circuit d'interface, **caractérisé en ce que**, côté entrée, le transformateur est piloté avec un signal (16) haute fréquence comparé à la longueur binaire des signaux numériques (19), et **en ce que** le signal (16) haute fréquence définit la durée d'un bit sur le côté entrée du transformateur et **en ce que** le côté secondaire du transformateur pilote un commutateur (12) du circuit d'interface qui module les signaux numériques (19) sur le bus (2), la longueur binaire des signaux numériques (19) sur le bus (2) correspondant à la durée pendant laquelle un signal (16) haute fréquence comparé à la longueur binaire est présent côté entrée sur le transformateur.

2. Circuit selon la revendication 1, **caractérisé en ce que** le commutateur (12) est un transistor.

3. Circuit selon la revendication 1 ou 2, **caractérisé en ce que** la pente de flanc des processus de commutation du commutateur (12) peut être choisie.

4. Circuit selon la revendication 3, **caractérisé en ce que** la pente de flanc des processus de commutation peut être choisie par un choix correspondant des paramètres de circuits de filtrage.

5. Circuit selon la revendication 4, **caractérisé en ce que** les circuits de filtrage sont des circuits passe-bas.

6. Circuit selon l'une des revendications 3 à 5, **caractérisé en ce que** les flancs montants et descendants peuvent être réglés indépendamment les uns des autres.

7. Circuit selon l'une des revendications précédentes, **caractérisé en ce que** le transformateur est piloté côté entrée par un contrôleur.

8. Circuit selon l'une des revendications précédentes, **caractérisé en ce qu'**il est conçu en tant qu'interface bidirectionnelle et présente une branche de réception.

9. Procédé de transmission de signaux à partir d'un dispositif de commande vers un bus (2) numérique connecté, présentant les étapes suivantes :
- pilotage du côté primaire d'un transformateur par le dispositif de commande, et
- pilotage, par le côté secondaire du transformateur, d'un commutateur (12) qui module des signaux numériques (19) sur le bus (2),
**caractérisé en ce que**, côté entrée, le transformateur est piloté avec un signal (16) haute fréquence comparé à la longueur binaire des signaux numériques (19),
et **en ce que** le signal (16) haute fréquence définit sur le côté entrée du transformateur la durée d'un bit, et **en ce que** le côté secondaire du transformateur pilote un commutateur (12) du circuit d'interface qui module les signaux numériques (19) sur le bus (2), la longueur binaire des signaux numériques (19) sur le bus (2) correspondant à la durée pendant laquelle un signal (16) haute fréquence comparé à la longueur binaire est présent côté entrée sur le transformateur.
